# EUROPEAN PATENT SPECIFICATION

(11) **EP 4 568 023 B1**
(45) Date of publication and mention of the grant of the patent: **14.10.2026**
(21) Application number: 23913910.8
(22) Date of filing: 03.01.2023
(51) Int. Cl.: H01R 13/02, H01R 24/00, H01M 10/48, H01R 13/641, H01M 50/569, H01M 10/42, H01M 50/209

(54) **BATTERY, AND POWER CONSUMING APPARATUS**
BATTERIE UND STROMVERBRAUCHENDES GERÄT
BATTERIE ET APPAREIL DE CONSOMMATION D'ÉNERGIE

(43) Date of publication of application: 11.06.2025
(73) Proprietor: Contemporary Amperex Technology Co., Limited, Fujian 352100 (CN)
(72) Inventor: LIAN, Dengwei, Ningde City, Fujian 352100 (CN); WANG, Lili, Ningde City, Fujian 352100 (CN)
(74) Representative: Lorenz Seidler Gossel Part. mbB
(86) International application number: PCT/CN2023/070122
(87) International publication number: WO 2024/145748

(56) References cited:
- CN-A- 103 460 438
- CN-A- 110 226 258
- CN-A- 111 262 307
- CN-U- 208 093 797
- JP-A- 2002 117 821
- JP-A- 2005 174 676
- JP-A- H08 162 221
- US-A- 4 927 382

## Description

### Technical Field

The present application relates to the technical field of batteries, and particularly to a battery including a connector and a power consuming apparatus.

### Background Art

Energy conservation and emission reduction are the keys to the sustainable development of the automobile industry. In this case, electric vehicles have become an important part of the sustainable development of the automobile industry due to their advantages in energy conservation and environmental protection. For the electric vehicles, battery technology is an important factor in their development.

In the development of the battery technology, in addition to improving the performance of batteries, the safety is also a non-negligible issue. If the safety of the batteries cannot be guaranteed, the batteries cannot be used. Therefore, how to enhance the safety performance of batteries is an urgent technical problem to be solved in the battery technology. For example, a battery comprising a connector including a male terminal having plug pins and a female terminal having jacks, are known from, for example, US 4 927 382 A, JP 2005 174676 A and JP H08 162221 A.

### Summary of the Invention

In view of the above problem, embodiments of the present application provide a battery as defined by claim 1 and claim 2 and a power consuming apparatus as defined by claim 9, which can improve the safety performance of the battery. Prefered embodiments of the invention are laid down in the dependant claims.

In a first aspect, a connector is provided. The connector includes: a male terminal and a female terminal, where the male terminal includes M first plug pins and N second plug pins, and the female terminal includes M first jacks and N second jacks, with M and N being positive integers; and when plugging of the male terminal and the female terminal is in place, the M first plug pins are respectively plugged into the M first jacks to form M first loops, and the N second plug pins are respectively plugged into the N second jacks to form N second loops, with a second conductive contact distance between each second plug pin and the corresponding second jack being smaller than a first conductive contact distance between each first plug pin and the corresponding first jack.

In an embodiment of the present application, one end of the connector is the male terminal, and the other end thereof is the female terminal. Further, the male terminal includes a plurality of plug pins, which are the M first plug pins and the N second plug pins, respectively, and the female terminal includes a plurality of jacks, which are the M first jacks and the N second jacks, respectively. When plugging of the male terminal and the female terminal is in place, the M first plug pins and the M first jacks form the M first loops, and each of the M first plug pins and the corresponding one of the M first jacks form a conductive contact distance, that is, the first conductive contact distance. Similarly, the N second plug pins and the N second jacks also form the N second loops, and each of the N second plug pins and the corresponding one of the N second jacks form the second conductive contact distance. When the second conductive contact distance is smaller than the first conductive contact distance, and plugging of the male terminal and the female terminal is not in place, the situation can be earlier sensed by the second loop than the first loop. The second conductive contact distance formed by each second plug pin and the corresponding second jack is smaller than the first conductive contact distance formed by each first plug pin and the corresponding first jack, such that the situation in which plugging of the whole connector is not in place can be earlier sensed by the N second loops formed by the N second plug pins and the N second jacks, that is, during use of the connector, a plug state of the connector can be monitored in real time by means of the relatively smaller second conductive contact distance of the second loop, and the possibility of plugging of the connector being not in place is reduced, so as to improve the safety performance of the battery.

In a possible implementation, a difference between the second conductive contact distance and the first conductive contact distance is 2 mm - 7 mm.

In an embodiment of the present application, the first conductive contact distances are conductive contact distances of the M first loops formed by the M first plug pins and the M first jacks; and the second conductive contact distances are conductive contact distances of the N second loops formed by the N second plug pins and the N second jacks. In order to sense a use state of the connector in real time, the second conductive contact distance is smaller than the first conductive contact distance. The difference between the second conductive contact distance and the first conductive contact distance is kept in the range of 2 mm - 7 mm, that is, the second conductive contact distance is 2 mm - 7 mm smaller than the first conductive contact distance, such that the plug state of the whole connector can be sensed in a timely manner by mens of the second loop, so as to improve the safety performance of the battery.

In a possible implementation, the second conductive contact distance is not less than 2 mm.

In an embodiment of the present application, in order to sense a state of the connector in a timely manner by means of the second loop and prevent false plug of the connector, the second conductive contact distance in the second loop is smaller than the first conductive contact distance in the first loop. The second conductive contact distance is kept to be not less than 2 mm, such that by means of the second loop, not only can normal use of the loop be ensured, but the plug state of the connector can also be monitored in real time, so as to improve the safety performance of the battery.

In a possible implementation, M is not less than 1 and N is equal to 1.

In an embodiment of the present application, the M first plug pins are respectively plugged into the M first jacks to form the M first loops, and the N second plug pins are respectively plugged into the N second jacks to form the N second loops. The second conductive contact distances in the N second loops are smaller than the first conductive contact distances in the M first loops, such that the use state of the connector can be monitored in real time by means of the second loop. M is not less than 1 and N is equal to 1, that is, the conductive contact distance of only one second loop is smaller than the conductive contact distances of a plurality of first loops, which is beneficial to reduce the production cost.

In a possible implementation, the second jack and the first jack are respectively connected to different pin harnesses, and the second plug pin and the first plug pin are respectively connected to different pin harnesses.

In an embodiment of the present application, the pin harnesses may be used for transmitting electrical signals, that is, transmitting electrical signals to each device connected to the pin harness. The first plug pin, the first jack, the second plug pin and the second jack are respectively connected to different pin harnesses, such that electrical signals can be transmitted to each jack and each plug pin by means of the corresponding pin harnesses, so as to improve the accuracy of signal transmission.

In a possible implementation, the second jack is connected to the pin harness of the first jack, and the second plug pin and the first plug pin are respectively connected to different pin harnesses.

In an embodiment of the present application, the pin harnesses are used for transmitting electrical signals. Each jack and each plug pin may be respectively connected to different pin harnesses, or certain second jack and certain first jack may share the same pin harness. When the second plug pin and the first plug pin are respectively connected to different pin harnesses, the second jack and the first jack share the same pin harness, such that not only can normal electrical signal transmission be kept, but the production cost can also be reduced, facilitating wide application in mass production.

In a possible implementation, the second plug pin is connected to the pin harness of the first plug pin, and the second jack and the first jack are respectively connected to different pin harnesses.

In an embodiment of the present application, each plug pin and each jack may be respectively connected to different pin harnesses, or certain second plug pin and certain first plug pin may share the same pin harness. When the second jack and the first jack are respectively connected to different pin harnesses, the second plug pin and the first plug pin share the same pin harness, such that not only can normal electrical signal transmission be ensured, but the production cost can also be reduced, facilitating wide application in mass production.

In a possible implementation, a dimension of the second plug pin extending from a first plug face of the male terminal is smaller than a dimension of the first plug pin extending from the first plug face; and when plugging of the male terminal and the female terminal is completely in place, the first plug face of the male terminal is attached to a second plug face of the female terminal.

In an embodiment of the present application, the male terminal and the female terminal are respectively provided with plug faces, that is, the first plug face and the second plug face. When plugging of the male terminal and the female terminal is completely in place, the first plug face is attached to the second plug face. In addition, each plug pin of the male terminal is required to extend from the first plug face and is plugged into the corresponding jack of the female terminal, so as to realize the conduction of the loop. The dimension of the second plug pin extending from the first plug face of the male terminal is smaller than the dimension of the first plug pin extending from the first plug face, that is, the dimension of the second plug pin is shortened, such that the second conductive contact distance of the second loop formed by the second plug pin and the second jack can be smaller than the first conductive contact distance of the first loop formed by the first plug pin and the first jack, and a connection state of the connector can then be sensed in a timely manner and monitored in real time by means of the second loop.

In a possible implementation, a distance between a conductive contact opening of the second jack and a second plug face of the female terminal is greater than a distance between a conductive contact opening of the first jack and the second plug face; and when plugging of the male terminal and the female terminal is completely in place, a first plug face of the male terminal is attached to the second plug face of the female terminal.

In an embodiment of the present application, the male terminal and the female terminal are respectively provided with plug faces, that is, the first plug face and the second plug face. When plugging of the male terminal and the female terminal is completely in place, the first plug face is attached to the second plug face. In addition, it is required that there is certain distance between the conductive contact opening of each jack of the female terminal and the second plug face for the plug pin of the male terminal to be plugged, so as to realize the conduction of the loop. The distance between the conductive contact opening of the second jack and the second plug face of the female terminal is greater than the distance between the conductive contact opening of the first jack and the second plug face, that is, the dimension of the second jack is shortened, such that the second conductive contact distance of the second loop formed by the second plug pin and the second jack can be smaller than the first conductive contact distance of the first loop formed by the first plug pin and the first jack, and the connection state of the connector can then be sensed in a timely manner and monitored in real time by means of the second loop.

In a possible implementation, the second loop is used for detecting whether plugging of the male terminal and the female terminal is in place.

In an embodiment of the present application, since the second conductive contact distance of the second loop is smaller than the first conductive contact distance of the first loop, when plugging of the connector is not in place, the situation can be earlier sensed by the second loop than the first loop. Therefore, the plugging situation of the male terminal and the female terminal can be detected by means of the second loop without affecting the normal use of the connector. Carrying out a conduction test on the connector by means of the second loop can detect whether a false connection of the connector occurs. In addition, when false plug of the connector occurs, the loops are detected, that is, the second loop occurs earlier than the first loop, such that early warning of the connector can be realized, thereby facilitating preventive maintenance of the connector, and improving the use safety of the connector and the battery.

In a possible implementation, the second loop includes an early warning device for indicating whether plugging of the male terminal and the female terminal is in place.

In an embodiment of the present application, since the second conductive contact distance of the second loop is smaller than the first conductive contact distance of the first loop, when plugging of the connector is not in place, the situation can be earlier sensed by the second loop than the first loop. The second loop further includes the early warning device, such that an operator can find and correct a false plug phenomenon of the connector in a timely manner, so as to further improve the use safety of the connector and the battery.

In a second aspect, a device is provided. The device includes: a male terminal, where the male terminal includes M first plug pins and N second plug pins, with M and N being positive integers.

In a third aspect, a device is provided. The device includes: a female terminal, where the female terminal includes M first jacks and N second jacks, with M and N being positive integers.

In a fourth aspect, a battery is provided. The battery includes: battery cells; and a transmission system including a connector in the first aspect or any possible implementation of the first aspect.

In a fifth aspect, a power consuming apparatus is provided. The power consuming apparatus includes: a battery in the above second aspect or any possible implementation of the second aspect, the battery being used for supplying electric energy.

In a sixth aspect, a power consuming apparatus is provided. The power consuming apparatus includes: a transmission system including a connector in the first aspect or any possible implementation of the first aspect.

In the technical solution of the present application, the male terminal including the M first plug pins and the N second plug pins is plugged into the female terminal including the M first jacks and the N second jacks to form the M first loops and the N second loops. The second conductive contact distance between each second plug pin and the corresponding second jack is smaller than the first conductive contact distance between each first plug pin and the corresponding first jack, such that the situation in which plugging of the whole connector is not in place can be earlier sensed by the N second loops formed by the N second plug pins and the N second jacks, that is, during use of the connector, a plug state can be monitored in real time, and the possibility of plugging of the connector being not in place is reduced, so as to improve the safety performance of the battery.

### Brief Description of the Drawings

In order to illustrate the technical solutions of the embodiments of the present application more clearly, the accompanying drawings required in the description of the embodiments of the present application will be described briefly below. Obviously, the accompanying drawings described below are merely some embodiments of the present application, and for those of ordinary skill in the art, other accompanying drawings can also be obtained from these accompanying drawings without any creative efforts.
FIG. 1 is a schematic structural diagram of a vehicle according to an embodiment of the present application;
FIG. 2 is a schematic exploded structural diagram of a battery according to an embodiment of the present application;
FIG. 3 is a schematic exploded structural diagram of a battery cell according to an embodiment of the present application;
FIG. 4 is a schematic structural diagram of a connector according to an embodiment of the present application;
FIG. 5 is a schematic structural diagram of a connector according to another embodiment of the present application;
FIG. 6 is a schematic structural diagram of a connector according to yet another embodiment of the present application;
FIG. 7 is a schematic structural diagram of a connector according to still another embodiment of the present application; and
FIG. 8 is a schematic structural diagram of a connector according to still another embodiment of the present application.
List of reference signs:
vehicle 1;
battery 10, controller 30, motor 40;
case 11, battery cell 20, housing 21, electrode assembly 22, accommodation space 23, end cap 24, connector 25;
upper case 111, lower case 112, first tab 221a, second tab 222a, electrode terminal 241, positive electrode terminal 241a, negative electrode terminal 241b, male terminal 251, female terminal 252, pin harness 253, conductive contact opening 254;
first plug pin 2511, second plug pin 2512, first plug face 2513, first jack 2521, second jack 2522, second plug face 2523, first conductive contact distance L₁, second conductive contact distance L₂, first direction X, second direction Y, third direction Z.

### Detailed Description of Embodiments

The implementations of the present application will be further described in detail below in conjunction with the accompanying drawings and embodiments. The following detailed description of the embodiments and the accompanying drawings are used to illustrate the principle of the present application by way of example but should not be used to limit the scope of the present application. That is, the present application is not limited to the described embodiments.

In the description of the present application, it should be noted that "a plurality of" means two or more, unless otherwise specified. The orientation or position relationship indicated by the terms "upper", "lower", "left", "right", "inner", "outer", etc. is only for the convenience of describing the present application and simplifying the description, rather than indicating or implying that the device or element referred to must have a particular orientation or be constructed and operated in a particular orientation, and therefore should not be construed as a limitation on the present application. In addition, the terms "first", "second", "third", etc. are used for descriptive purposes only, and should not be construed as indicating or implying the relative importance. The term "perpendicular" does not mean being perpendicular in the strict sense, but within an allowable range of errors. The term "parallel" does not mean being parallel in the strict sense, but within an allowable range of errors.

The orientation terms in the following description all indicate directions shown in the accompanying drawings, but do not limit the specific structure in the present application. In the description of the present application, it should also be noted that the terms "mounting", "connect", and "connection" should be interpreted in the broad sense unless explicitly defined and limited otherwise. For example, the connection may be a fixed connection, a detachable connection, or an integral connection, or may be a direct connection, or an indirect connection by means of an intermediate medium. For those of ordinary skill in the art, the specific meanings of the terms mentioned above in the present application can be construed according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

Unless otherwise defined, all technical and scientific terms used in the present application have the same meanings as those commonly understood by those skilled in the art to which the present application belongs; The terms used in the description of the present application are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion. The terms "first", "second", etc. in the description and the claims of the present application as well as the accompanying drawings described above are used to distinguish between different objects, rather than describing a specific order or a primary-secondary relationship.

In the present application, "embodiment" mentioned means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment. Those skilled in the art should understand, in explicit and implicit manners, that an embodiment described in the present application may be combined with another embodiment.

In embodiments of the present application, a battery cell may include a lithium-ion secondary battery, a lithium-ion primary battery, a lithium-sulfur battery, a sodium/lithium-ion battery, a sodium-ion battery or a magnesium-ion battery, etc., which is not limited in embodiments of the present application. The battery cell may be cylindrical, flat, cuboid or in other shapes, which is also not limited in embodiments of the present application. The battery cells are generally classified into three types depending on the way of package: cylindrical battery cells, prismatic battery cells and pouch battery cells, which is also not limited in embodiments of the present application.

A battery mentioned in embodiments of the present application refers to a single physical module including one or more battery cells to provide a higher voltage and capacity. For example, the battery mentioned in the present application may include a battery module, a battery pack, etc. The battery generally includes a case for packaging one or more battery cells. The case can prevent liquid or other foreign matters from affecting charging or discharging of the battery cell.

The battery cell may include an electrode assembly and an electrolytic solution, and the electrode assembly is composed of a positive electrode plate, a negative electrode plate and a separator. The operation of the battery cell mainly relies on the movement of metal ions between the positive electrode plate and the negative electrode plate. The positive electrode plate includes a positive electrode current collector and a positive electrode active material layer. A surface of the positive electrode current collector is coated with the positive electrode active material layer, and the current collector not coated with the positive electrode active material layer protrudes from the current collector coated with the positive electrode active material layer and is used as a positive electrode tab. Taking a lithium-ion battery as an example, the positive electrode current collector may be made of aluminum, and the positive electrode active material may be lithium cobalt oxides, lithium iron phosphate, ternary lithium or lithium manganate, etc. The negative electrode plate includes a negative electrode current collector and a negative electrode active material layer. A surface of the negative electrode current collector is coated with the negative electrode active material layer, and the current collector not coated with the negative electrode active material layer protrudes from the current collector coated with the negative electrode active material layer and is used as a negative electrode tab. The negative electrode current collector may be made of copper, and the negative electrode active material may be graphite, carbon, or silicon, etc. In order to ensure that no fusing occurs when a large current passes, there are a plurality of positive electrode tabs stacked together, and there are a plurality of negative electrode tabs stacked together. The separator may be made of polypropylene (PP) or polyethylene (PE), etc. In addition, the electrode assembly may be of a wound structure or a stacked structure, which is not limited in embodiments of the present application.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles and electric vehicles and in many fields such as military equipment and aerospace. With the continuous expansion of the application field of electric batteries, the market demand for the traction batteries is also expanding.

Design factors in many aspects are required to be simultaneously considered for the development of the battery technology, such as energy density, cycling performance, discharge capacity, charge-discharge rate, and other performance parameters. In addition, the safety performance and production cost of the battery is required to be considered.

Connectors are used for transmitting current or signals, and are extremely commonly used parts in batteries and even electric vehicles. In actual production and use processes, if plugging of the connector is not in place, that is, when false plug occurs, a use state of the battery may not be sensed in a timely manner or a circuit is short-circuited, resulting in damage to the battery or the electric vehicle using the battery. In addition, poor contact of the connector for a long time may also cause overheat of the connector, which is also a major safety hazard.

Therefore, there are many connectors which can prevent false plug on the market. However, current false plug prevention mostly relies on secondary lock mechanical protection, which has shortcomings as follows: (1) designs are complex; (2) a secondary lock structure has more parts, which may cause functional failure due to missing mounting; and (3) it is impossible to ensure long-term reliability of subsequent secondary lock structures, and it is impossible to monitor a plug state of the connector when in use in later period. Therefore, how to provide a new connector capable of preventing false plug is an urgent problem to be solved at present.

In view of this, an embodiment of the present application provides a connector. A male terminal including M first plug pins and N second plug pins is plugged into a female terminal including M first jacks and N second jacks of the connector to form M first loops and N second loops. A second conductive contact distance between each second plug pin and the corresponding second jack is smaller than a first conductive contact distance between each first plug pin and the corresponding first jack, such that the situation in which plugging of the whole connector is not in place can be earlier sensed by the N second loops formed by the N second plug pins and the N second jacks, that is, during use of the connector, a plug state can be monitored in real time, and the possibility of plugging of the connector being not in place is reduced, so as to improve the safety performance of the battery.

The technical solutions described in the embodiments of the present application are all applicable to various devices using batteries, such as mobile phones, portable apparatuses, laptops, battery cars, electric toys, electric tools, electric vehicles, ships and spacecrafts. For example, the spacecrafts include airplanes, rockets, space shuttles, space vehicles, etc.

It should be understood that the technical solutions described in the embodiments of the present application are not only applicable to the apparatuses described above, but also applicable to all apparatuses using a battery. However, for the sake of brevity of description, the following embodiments will be described taking an electric vehicle as an example.

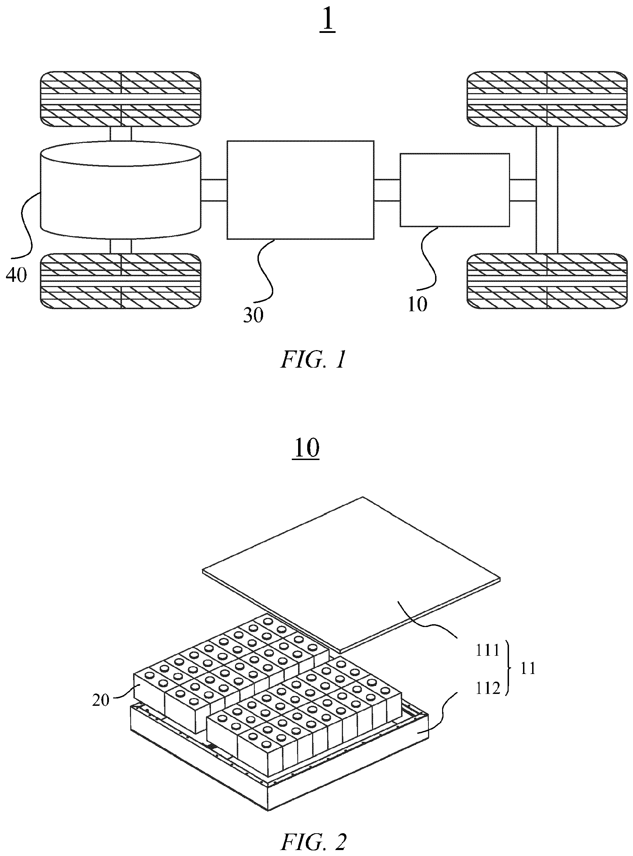

For example, FIG. 1 is a schematic structural diagram of a vehicle according to an embodiment of the present application. As shown in FIG. 1, the vehicle 1 may be a fuel vehicle, a gas vehicle, or a new energy vehicle. The new energy vehicle may be a battery electric vehicle, a hybrid electric vehicle, an extended-range vehicle, etc. The vehicle 1 may be internally provided with a motor 40, a controller 30 and a battery 10. The controller 30 is used for controlling the battery 10 to supply power to the motor 40. For example, the battery 10 may be arranged at a bottom, a head or a tail of the vehicle 1. The battery 10 may be used for supplying power to the vehicle 1. For example, the battery 10 may serve as a power source for operating the vehicle 1 for use in a circuit system of the vehicle 1, for example, to meet the working power demand of the vehicle 1 during startup, navigation and running. In another embodiment of the present application, the battery 10 may not only serve as a power source for operating the vehicle 1, but may also serve as a power source for driving the vehicle 1, instead of or partially instead of fuel or natural air, to provide driving power for the vehicle 1.

The battery 10 may include a plurality of battery cells in order to meet different power demands. FIG. 2 is a schematic exploded structural diagram of a battery 10 according to an embodiment of the present application. As shown in FIG. 2, the battery 10 may include a plurality of battery cells 20. Any number of battery cells 20 may be provided according to different power demands. The plurality of battery cells 20 may be in series connection, in parallel connection or in series-parallel connection to achieve higher capacity or power. Since each battery 10 may include a large number of battery cells 20, and for ease of mounting, the battery cells 20 may be provided in groups, and each group of battery cells 20 forms a battery module. The number of battery cells 20 included in the battery module is not limited and may be set according to demands. The battery may include a plurality of battery modules that may be in series connection, in parallel connection or in series-parallel connection.

Optionally, the battery 10 may further include other structures. For example, the battery 10 may further include a busbar component (not shown in the figures) for implementing an electrical connection, such as a parallel connection, a series connection, or a series-parallel connection, between the plurality of battery cells 20. Specifically, the busbar component may implement the electrical connection between the battery cells 20 by connecting electrode terminals of the battery cells 20. Further, the busbar component may be fixed to the electrode terminals of the battery cells 20 by means of welding. Electric energy of the plurality of battery cells 20 may be further led out by means of an electrically conductive structure passing through a case. Optionally, the electrically conductive structure may also be a busbar component.

Optionally, the battery 10 may further include a transmission system for transmitting signals of the plurality of battery cells 20, such as voltage and temperature sampling signals, etc.

Optionally, the signal transmission system includes a connector for realizing a line connection in the transmission system.

Optionally, the transmission system may be directly arranged in a power consuming apparatus, for example, the vehicle 1. The transmission system may be used for transmitting a connection signal of the vehicle 1, etc.

The battery 10 may further include a case 11 (or referred as an enclosure) with the interior of the case 11 being of a hollow structure, and the plurality of battery cells 20 are accommodated in the case 11. As shown in FIG. 2, the case 11 may include two parts, referred to herein as an upper case 111 and a lower case 112 respectively. The upper case 111 and the lower case 112 are in snap-fit with each other. The upper case 111 and the lower case 112 may be shaped depending on the shape of a combination of the plurality of battery cells 20, and at least one of the upper case 111 and the lower case 112 is provided with an opening. For example, only one of the upper case 111 and the lower case 112 of the case 11 may be a hollow cuboid provided with an opening, and the other one is plate-shaped to close the opening. For example, as shown in FIG. 2, taking an example herein in which the lower case 112 is a hollow cuboid and has only one face with an opening, and the upper case 111 is plate-shaped, the upper case 111 covers the opening of the lower case 112 to form the case 11 provided with a closed cavity that may be used for accommodating the plurality of battery cells 20.

Optionally, the upper case 111 and the lower case 112 of the case 11 in an embodiment of the present application may be in other shapes. For example, each of the upper case 111 and the lower case 112 may be a hollow cuboid and has only one face with an opening, the opening of the upper case 111 and the opening of the lower case 112 are arranged opposite each other, and the upper case 111 and the lower case 112 are in snap-fit with each other to form the case 11 provided with the closed cavity. The plurality of battery cells 20 are in parallel connection, in series connection or in series-parallel connection, and then are placed in the case formed by snap-fit between the upper case 111 and the lower case 112.

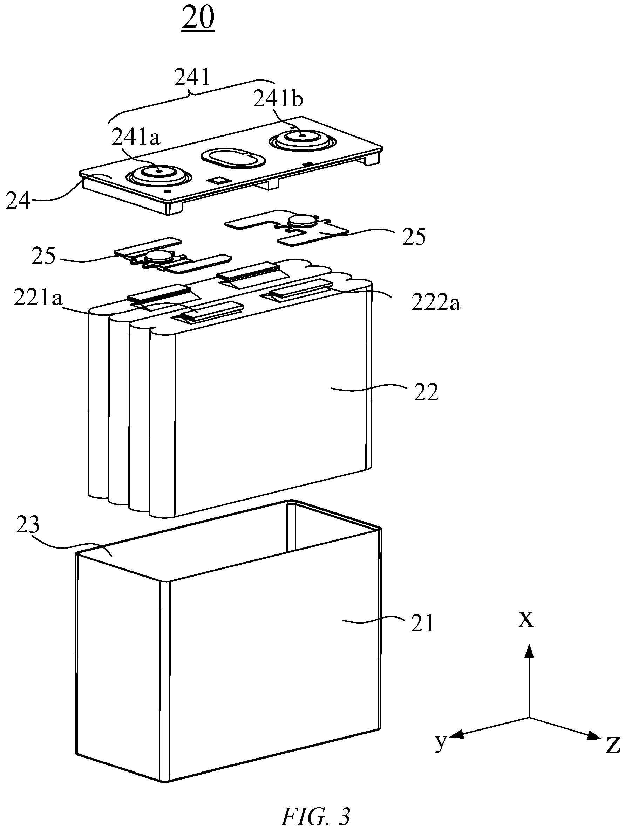

FIG. 3 is a schematic exploded structural diagram of a battery cell 20 according to an embodiment of the present application. As shown in FIG. 3, the battery cell 20 includes one or more electrode assemblies 22, a housing 21 and an end cap 24. The housing 21 and the end cap 24 form a casing or a battery box. Walls of the housing 21 and the end cap 24 are all referred to as walls of the battery cell 20. For a cuboid battery cell 20, the walls of the housing 21 include a bottom wall and four side walls, and the bottom wall and the four side walls are connected to each other to form an accommodation space 23 in which the electrode assembly 22 is placed. The housing 21 may be determined depending on the shape of a combination of the one or more electrode assemblies 22. For example, the housing 21 may be a hollow cuboid, cube, or cylinder, and one of faces of the housing 21 is provided with an opening such that the one or more electrode assemblies 22 may be placed in the housing 21. For example, when the housing 21 is a hollow cuboid or cube, one of flat faces of the housing 21 is an open face, that is, this flat face has no wall body such that an interior is in communication with an exterior of the housing 21. When the housing 21 is a hollow cylinder, an end face of the housing 21 is an open face, that is, this end face has no wall body such that an interior is in communication with an exterior of the housing 21. The end cap 24 covers the opening of the accommodation space 23 and is connected to the housing 21, so as to form the closed cavity in which the electrode assembly 22 is placed. The housing 21 is filled with electrolyte, fro example, an electrolytic solution.

The battery cell 20 may further include two electrode terminals 241. The two electrode terminals 241 may be arranged on the end cap 24. The end cap 24 is generally in the shape of a flat plate, the two electrode terminals 241 are fixed to a flat plate face of the end cap 24, and the two electrode terminals 241 are a positive electrode terminal 241a and a negative electrode terminal 241b respectively. Each of the electrode terminals 241 is correspondingly provided with an electrically conductive structure 2212, which is located between the end cap 24 and the electrode assembly 22 for electrically connecting the electrode assembly 22 to the electrode terminal 241.

As shown in FIG. 3, each electrode assembly 22 is provided with a first tab 221a and a second tab 222a. The first tab 221a and the second tab 222a have opposite polarities. For example, when the first tab 221a is a positive electrode tab, the second tab 222a is a negative electrode tab. In an embodiment of the present application, the first tab 221a of the one or more electrode assemblies 22 is connected to one of the electrode terminals by means of one of the electrically conductive structures 2212, and the second tab 222a of the one or more electrode assemblies 22 is connected to the other electrode terminal by means of the other electrically conductive structure 2212. For example, the positive electrode terminal 241a is connected to the positive electrode tab by means of one of the electrically conductive structures 2212, and the negative electrode terminal 241b is connected to the negative electrode tab by means of the other electrically conductive structure 2212.

In the battery cell 20, according to actual usage requirements, one or more electrode assemblies 22 may be provided. As shown in FIG. 3, four independent electrode assemblies 22 are provided in the battery cell 20.

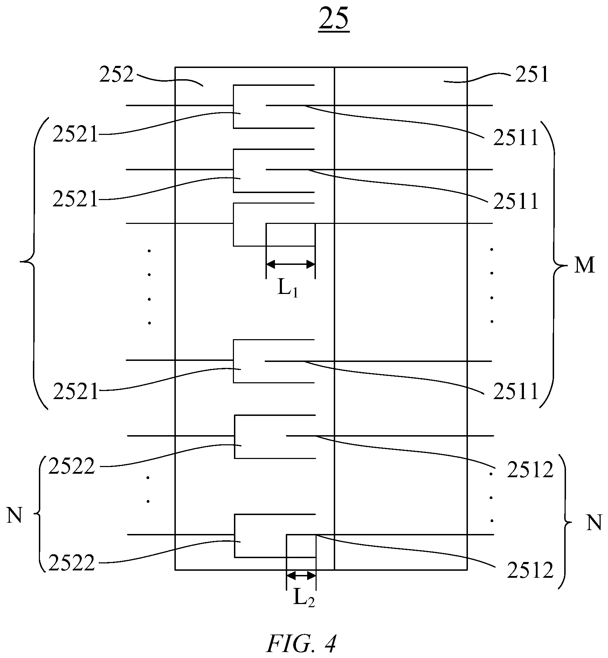

FIG. 4 is a schematic structural diagram of a connector 25 according to an embodiment of the present application. As shown, the connector 25 includes a male terminal 251 and a female terminal 252. The male terminal 251 includes M first plug pins 2511 and N second plug pins 2512, and the female terminal 252 includes M first jacks 2521 and N second jacks 2522, with M and N being positive integers. When plugging of the male terminal 251 and the female terminal 252 is in place, the M first plug pins 2511 are respectively plugged into the M first jacks 2521 to form M first loops, and the N second plug pins 2512 are respectively plugged into the N second jacks 2522 to form N second loops, with a second conductive contact distance L₂ between each second plug pin 2512 and the corresponding second jack 2522 being smaller than a first conductive contact distance L₁ between each first plug pin 2511 and the corresponding first jack 2521.

As mentioned above, the connector 25 is a device that connects two active devices and may be used for transmitting current or signals. The connector 25 includes the male terminal 251 and the female terminal 252. The male terminal 251 being plugged into the female terminal 252 enables transmission of information or current.

It should be noted herein that the conductive contact distance is a portion where a plug pin and a jack are actually electrically connected to each other and overlap each other.

One end of the connector 25 is the male terminal 251, and the other end thereof is the female terminal 252. Further, the male terminal 251 includes a plurality of plug pins, which are the M first plug pins 2511 and the N second plug pins 2512, respectively, and the female terminal 252 includes a plurality of jacks, which are the M first jacks 2521 and the N second jacks 2522, respectively. When plugging of the male terminal 251 and the female terminal 252 is in place, the M first plug pins 2511 and the M first jacks 2521 form the M first loops, and each of the M first plug pins 2511 and the corresponding one of the M first jacks 2521 form a conductive contact distance, that is, the first conductive contact distance L₁. Similarly, the N second plug pins 2512 and the N second jacks 2522 also form the N second loops, and each of the N second plug pins 2512 and the corresponding one of the N second jacks 2522 form the second conductive contact distance L₂. When the second conductive contact distance L₂ is smaller than the first conductive contact distance L₁, and plugging of the male terminal 251 and the female terminal 252 is not in place, the situation can be earlier sensed by the second loop than the first loop.

In the above solution, the second conductive contact distance L₂ between each second plug pin 2512 and the corresponding second jack 2522 is smaller than the first conductive contact distance L₁ between each first plug pin 2511 and the corresponding first jack 2521, such that the situation in which plugging of the whole connector 25 is not in place can be earlier sensed by the N second loops formed by the N second plug pins 2512 and the N second jacks 2522, that is, during use of the connector, a plug state of the connector 25 can be monitored in real time by means of the relatively smaller second conductive contact distance L₂ of the second loop, and false plug of the connector 25 is prevented, so as to improve the safety performance of the battery 10.

In some embodiments, a difference between the second conductive contact distance L₂ and the first conductive contact distance L₁ is 2 mm - 7 mm.

The first conductive contact distances L₁ are conductive contact distances of the M first loops formed by the M first plug pins 2511 and the M first jacks 2521. The second conductive contact distances L₂ are conductive contact distances of the N second loops formed by the N second plug pins 2512 and the N second jacks 2522. In order to sense a use state of the connector 25 in real time, the second conductive contact distance L₂ is smaller than the first conductive contact distance L₁.

In the above solution, the difference between the second conductive contact distance L₂ and the first conductive contact distance L₁ is kept in the range of 2 mm - 7 mm, that is, the second conductive contact distance L₂ is 2 mm - 7 mm smaller than the first conductive contact distance L₁, such that the plug state of the whole connector 25 can be sensed in a timely manner by mens of the second loop, so as to improve the safety performance of the battery 10.

In some embodiments, the second conductive contact distance L₂ is not less than 2 mm.

In order to sense a state of the connector 25 in a timely manner by means of the second loop and prevent false plug of the connector 25, the second conductive contact distance L₂ in the second loop is smaller than the first conductive contact distance L₁ in the first loop.

In the above solution, the second conductive contact distance L₂ is kept to be not less than 2 mm, such that by means of the second loop, not only can normal use of the loop be ensured, but the plug state of the connector 25 can also be monitored in real time, so as to improve the safety performance of the battery 10.

It should be noted herein that the second conductive contact distance L₂ being not less than 2 mm is only an example for ensuring the ease of manufacturing the connector. The second conductive contact distance L₂ in the actual production process may vary according to different manufacturing requirements. In other words, in the present application, there are no special requirements for a specific value of the second conductive contact distance L₂.

In addition, in some embodiments, in order to achieve high adaptability of the connector to various devices, the first conductive contact distance L₁ may be kept in the range of 3 mm - 20 mm. However, in the present application, there are also no special requirements for the first conductive contact distance L₁.

In some embodiments, M is not less than 1 and N is equal to 1.

The M first plug pins 2511 are respectively plugged into the M first jacks 2521 to form the M first loops, and the N second plug pins 2512 are respectively plugged into the N second jacks 2522 to form the N second loops. The second conductive contact distances L₂ in the N second loops are smaller than the first conductive contact distances L₁ in the M first loops, such that the use state of the connector 25 can be monitored in real time by means of the second loop.

In the above solution, M is not less than 1 and N is equal to 1, that is, the conductive contact distance L₂ of only one second loop is smaller than the conductive contact distances L₁ of a plurality of first loops, which is beneficial to reduce the production cost.

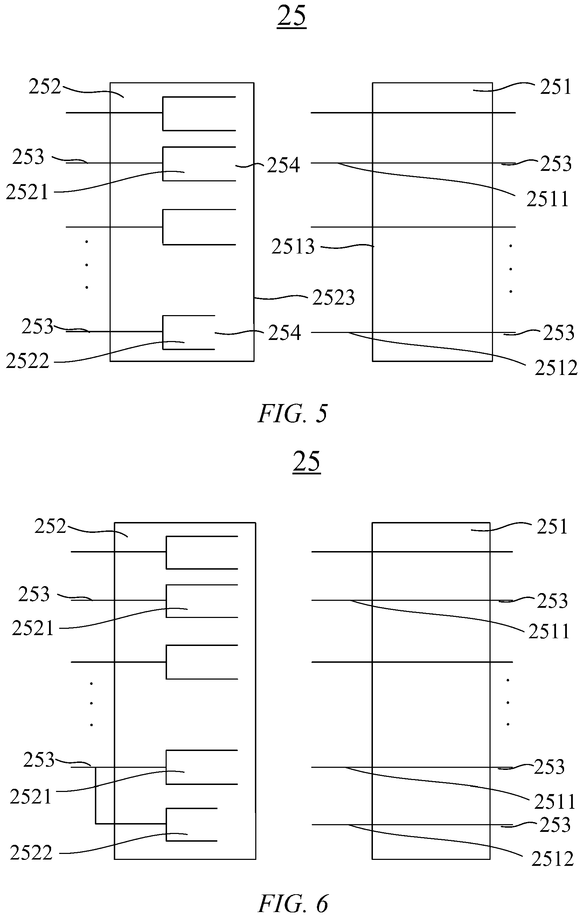

FIG. 5 is a schematic structural diagram of a connector 25 according to another embodiment of the present application. As shown in FIG. 5, in some embodiments, the second jack 2522 and the first jack 2521 are respectively connected to different pin harnesses 253, and the second plug pin 2512 and the first plug pin 2511 are respectively connected to different pin harnesses 253.

The pin harnesses 253 may be used for transmitting electrical signals, that is, transmitting electrical signals to each device connected to the pin harness 253.

As mentioned above, the battery 10 may include a transmission system or a transmission system may be directly arranged in the vehicle 1, and the transmission system includes the connector 25 in an embodiment of the present application. The transmission system is used for transmitting signals such as temperatures and voltages of the plurality of battery cells 20 or transmitting connection signals of the vehicle 1, etc., and the connector 25 is used for realizing a line connection in the transmission system. The specific connection methods between the connector 25 and the battery 10 or the plurality of battery cells 20, and the connector 25 and the power consuming apparatus, for example, the vehicle 1, are not limited in the present application. For example, in some embodiments, each battery cell 20 may be connected to the connector 25 by means of the electrode terminal 241, or each battery cell 20 may be connected to a busbar component, and the busbar component is in turn connected to the connector 25. What is mentioned above is only a macroscopic description of a connection relationship between components, and details of how to connect the components are not repeated herein.

In the above solution, the first jack 2521, the first plug pin 2511, the second jack 2522 and the second plug pin 2512 are respectively connected to different pin harnesses 253, such that electrical signals can be transmitted to each jack and each plug pin by means of the corresponding pin harnesses 253, so as to improve the accuracy of signal transmission.

FIG. 6 is a schematic structural diagram of a connector 25 according to yet another embodiment of the present application. As shown in FIG. 6, in some embodiments, the second jack 2522 is connected to a pin harness 253 of the first jack 2521, and the second plug pins 2512 and the first plug pins 2511 are respectively connected to different pin harnesses 253.

The pin harnesses 253 are used for transmitting electrical signals. Each jack and each plug pin may be respectively connected to different pin harnesses 253, or certain second jack 2522 and certain first jack 2521 may share the same pin harness 253.

In the above solution, when the second plug pin 2512 and the first plug pin 2511 are respectively connected to different pin harnesses 253, the second jack 2522 and the first jack 2521 share the same pin harness 253, such that not only can normal electrical signal transmission be kept, but the production cost can also be reduced, facilitating wide application in mass production.

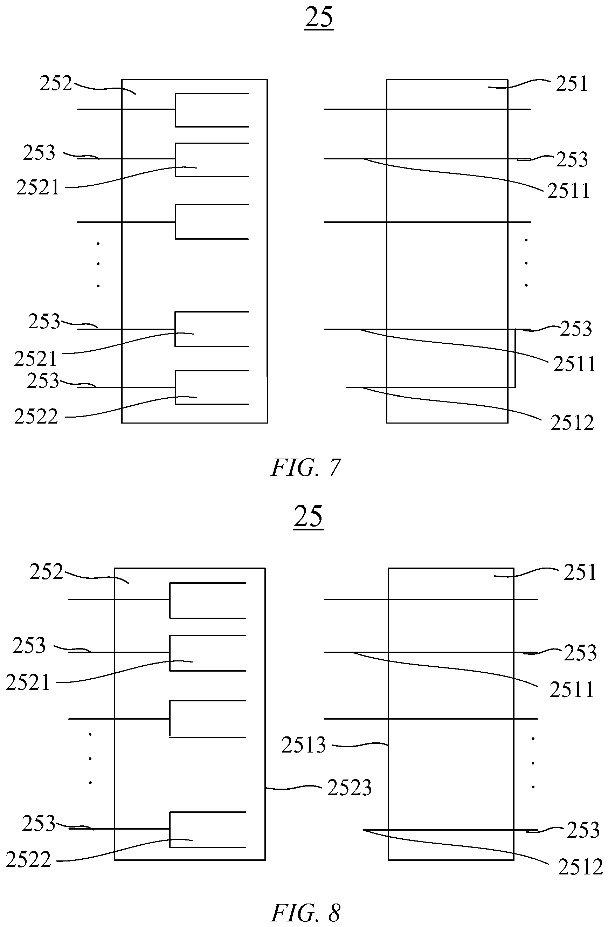

FIG. 7 is a schematic structural diagram of a connector 25 according to yet another embodiment of the present application. As shown in FIG. 7, in some embodiments, the second plug pin 2512 is connected to a pin harness 253 of the first plug pin 2511, and the second jack 2522 and the first jack 2521 are respectively connected to different pin harnesses 253.

Each plug pin and each jack may be respectively connected to different pin harnesses 253, or certain second plug pin 2512 and certain first plug pin 2511 may share the same pin harness 253.

In the above solution, when the second jack 2522 and the first jack 2521 are respectively connected to different pin harnesses 253, the second plug pin 2512 and the first plug pin 2511 share the same pin harness 253, such that not only can normal electrical signal transmission be ensured, but the production cost can also be reduced, facilitating wide application in mass production.

FIG. 8 is a schematic structural diagram of a connector 25 according to still another embodiment of the present application. As shown in FIG. 8, in some embodiments, a dimension of the second plug pin 2512 extending from a first plug face 2513 of the male terminal 251 is smaller than a dimension of the first plug pin 2511 extending from the first plug face 2513. When plugging of the male terminal 251 and the female terminal 252 is completely in place, the first plug face 2513 of the male terminal 251 is attached to a second plug face 2523 of the female terminal 252.

The male terminal 251 and the female terminal 252 are respectively provided with plug faces, that is, the first plug face 2513 and the second plug face 2523. When plugging of the male terminal 251 and the female terminal 252 is completely in place, the first plug face 2513 is attached to the second plug face 2523. In addition, each plug pin of the male terminal 251 is required to extend from the first plug face 2513 and is plugged into the corresponding jack of the female terminal 252, so as to realize the conduction of the loop.

It should be noted herein that only the dimensions of the first plug pin 2511 and the second plug pin 2512 extending from the male terminal 251 are different, and dimensions of the first plug pin and the second plug pin in the male terminal 251 are the same. That is, the dimension of the second plug pin 2512 is reduced compared with the first plug pin 2511.

In addition, attachment herein means that two surfaces are in contact with each other. In the present application, when plugging of the male terminal 251 and the female terminal 252 is completely in place, the first plug face 2513 of the male terminal 251 is attached to the second plug face 2523 of the female terminal 252. If plugging of the male terminal 251 and the female terminal 252 is not completely in place, there is certain gap between the first plug face 2513 and the second plug face 2523, that is, the first plug face cannot be attached to the second plug face. However, it should be noted that the gap between the first plug face 2513 and the second plug face 2523 due to incomplete plugging in place will not affect normal use of the connector 25.

In the above solution, the dimension of the second plug pin 2512 extending from the first plug face 2513 of the male terminal 251 is smaller than the dimension of the first plug pin 2511 extending from the first plug face 2513, that is, the dimension of the second plug pin 2512 is shortened, such that the second conductive contact distance L₂ of the second loop formed by the second plug pin 2512 and the second jack 2522 can be smaller than the first conductive contact distance L₁ of the first loop formed by the first plug pin 2511 and the first jack 2521, and a connection state of the connector 25 can then be sensed in a timely manner and monitored in real time by means of the second loop.

With further reference to FIG. 5, as shown in FIG. 5, a distance between a conductive contact opening 254 of the second jack 2522 and the second plug face 2523 of the female terminal 252 is greater than a distance between a conductive contact opening 254 of the first jack 2521 and the second plug face 2523. When plugging of the male terminal 251 and the female terminal 252 is completely in place, the first plug face 2513 of the male terminal 251 is attached to the second plug face 2523 of the female terminal 252.

The male terminal 251 and the female terminal 252 are respectively provided with plug faces, that is, the first plug face 2513 and the second plug face 2523. When plugging of the male terminal 251 and the female terminal 252 is completely in place, the first plug face 2513 is attached to the second plug face 2523. In addition, it is required that there is certain distance between the conductive contact opening of each jack of the female terminal 252 and the second plug face 2523 for the plug pin of the male terminal 251 to be plugged, so as to realize the conduction of the loop.

It should be noted that the distance between the conductive contact opening 254 of the second jack 2522 and the second plug face 2523 of the female terminal 525 is greater than that between the conductive contact opening 254 of the first jack 2521 and the second plug face of the female terminal, and the first jack 2521 is aligned with the second jack 2522 on the side thereof away from the second plug face 2523. That is, the dimension of the second jack 2522 is shortened compared with the first jack 2521.

In addition, the conductive contact opening 254 is an opening of each jack, not an opening in the second plug face 2523.

In the above solution, the distance between the conductive contact opening 254 of the second jack 2522 and the second plug face 2523 of the female terminal 252 is greater than the distance between the conductive contact opening 254 of the first jack 2521 and the second plug face 2523, that is, the dimension of the second jack 2522 is shortened, such that the second conductive contact distance L₂ of the second loop formed by the second plug pin 2512 and the second jack 2522 can be smaller than the first conductive contact distance L₁ of the first loop formed by the first plug pin 2511 and the first jack 2521, and the connection state of the connector 25 can then be sensed in a timely manner and monitored in real time by means of the second loop.

In some embodiments, the second loop is used for detecting whether plugging of the male terminal 251 and the female terminal 252 is in place.

Since the second conductive contact distance L₂ of the second loop is smaller than the first conductive contact distance L₁ of the first loop, when plugging of the connector 25 is not in place, the situation can be earlier sensed by the second loop than the first loop. Therefore, the plugging situation of the male terminal 251 and the female terminal 252 can be detected by means of the second loop without affecting the normal use of the connector 25.

In the above solution, carrying out a conduction test on the connector 25 by means of the second loop can detect whether a false connection of the connector 25 occurs. In addition, when false plug of the connector 25 occurs, the loops are detected, that is, the second loop occurs earlier than the first loop, such that early warning of the connector 25 can be realized, thereby facilitating preventive maintenance of the connector 25, and improving the use safety of the connector 25 and the battery 10 .

In some embodiments, the second loop includes an early warning device for indicating whether plugging of the male terminal 251 and the female terminal 252 is in place.

Since the second conductive contact distance L₂ of the second loop is smaller than the first conductive contact distance L₁ of the first loop, when plugging of the connector is not in place, the situation can be earlier sensed by the second loop than the first loop.

The early warning device may be a warning lamp or an alarm, which is not limited in the present application.

In the above solution, the second loop further includes the early warning device, such that an operator can find and correct a false plug phenomenon of the connector 25 in a timely manner, so as to further improve the use safety of the connector 25 and the battery 10.

An embodiment of the present application further provides a device. The device may include a male terminal 251, where the male terminal 251 includes M first plug pins 2511 and N second plug pins 2512, with M and N being positive integers.

An embodiment of the present application further provides a device. The device may include a female terminal 252, where the female terminal 252 includes M first jacks 2521 and N second jacks 2522, with M and N being positive integers.

In some embodiments, a connection between the two devices can be realized by means of a connection between the male terminal 251 and the female terminal 252.

An embodiment of the present application further provides a battery 10. The battery 10 may include battery cells 20 and a transmission system, the transmission system being used for transmitting signals of the plurality of battery cells 20. The transmission system includes a connector 25 of any one of the above embodiments, and the connector 25 is used for realizing a line connection in the signal transmission system.

In some embodiments, the battery 10 may further include a case 11, a busbar component and other structures, which will not be repeated herein.

An embodiment of the present application further provides a power consuming apparatus. The power consuming apparatus may include a battery 10 in the above embodiment. Optionally, the power consuming apparatus may be a vehicle 1, a ship, a spacecraft, etc., which is not limited in embodiments of the present application.

An embodiment of the present application further provides a power consuming apparatus. The power consuming apparatus may include a transmission system, the transmission system being used for transmitting signals of the power consuming apparatus. The transmission system includes a connector 25 of any one of the above embodiments, and the connector 25 is used for realizing a line connection in the signal transmission system. Optionally, the power consuming apparatus may be a vehicle 1, a ship, a spacecraft, etc., which is not limited in embodiments of the present application.

While the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery, comprising:
battery cells (20); and
a transmission system comprising a connector (25), the transmission system being used for transmitting signals of the plurality of battery cells (20);
said connector (25) comprising:
a male terminal (251) and a female terminal (252), wherein the male terminal (251) comprises M first plug pins (2511) and N second plug pins (2512), and the female terminal (252) comprises M first jacks (2521) and N second jacks (2522), with M and N being positive integers; and
when plugging of the male terminal (251) and the female terminal (252) is in place, the M first plug pins (2511) are respectively plugged into the M first jacks (2521) to form M first loops, and the N second plug pins (2512) are respectively plugged into the N second jacks (2522) to form N second loops, with a second conductive contact distance (L₂) between each second plug pin (2512) and the corresponding second jack (2522) being smaller than a first conductive contact distance (L₁) between each first plug pin (2511) and the corresponding first jack (2521), wherein the second jack (2522) is connected to a pin harness (253) of the first jack (2521), and the second plug pin (2512) and the first plug pin (2511) are respectively connected to different pin harnesses (253).

2. A battery, comprising:
battery cells (20); and
a transmission system comprising a connector (25), the transmission system being used for transmitting signals of the plurality of battery cells (20);
said connector (25) comprising:
a male terminal (251) and a female terminal (252), wherein the male terminal (251) comprises M first plug pins (2511) and N second plug pins (2512), and the female terminal (252) comprises M first jacks (2521) and N second jacks (2522), with M and N being positive integers; and
when plugging of the male terminal (251) and the female terminal (252) is in place, the M first plug pins (2511) are respectively plugged into the M first jacks (2521) to form M first loops, and the N second plug pins (2512) are respectively plugged into the N second jacks (2522) to form N second loops, with a second conductive contact distance (L₂) between each second plug pin (2512) and the corresponding second jack (2522) being smaller than a first conductive contact distance (L₁) between each first plug pin (2511) and the corresponding first jack (2521), wherein the second plug pin (2512) is connected to a pin harness (253) of the first plug pin (2511), and the second jack (2522) and the first jack (2521) are respectively connected to different pin harnesses (253).

3. The battery according to claim 1 or 2, wherein a difference between the second conductive contact distance (L₂) and the first conductive contact distance (L₁) is 2 mm - 7 mm; and/or the second conductive contact distance (L₂) is not less than 2 mm.

4. The battery according to any one of the preceeding claims, wherein M is not less than 1 and N is equal to 1.

5. The battery according to any one of claims 1-4, wherein a dimension of the second plug pin (2512) extending from a first plug face (2513) of the male terminal (251) is smaller than a dimension of the first plug pin (2511) extending from the first plug face (2513); and
when plugging of the male terminal (251) and the female terminal (252) is completely in place, the first plug face (2513) of the male terminal (251) is attached to a second plug face (2523) of the female terminal (252).

6. The battery according to any one of claims 1-4, wherein a distance between a conductive contact opening (254) of the second jack (2522) and a second plug face (2523) of the female terminal (252) is greater than a distance between a conductive contact opening (254) of the first jack (2521) and the second plug face (2523); and
when plugging of the male terminal (251) and the female terminal (252) is completely in place, a first plug face (2513) of the male terminal (251) is attached to the second plug face (2523) of the female terminal (252).

7. The battery according to any one of claims 1 to 6, wherein the second loop is used for detecting whether plugging of the male terminal (251) and the female terminal (252) is in place.

8. The battery according to claim 7, wherein the second loop comprises an early warning device for indicating whether plugging of the male terminal (251) and the female terminal (252) is in place.

9. A power consuming apparatus, comprising:
a battery (10) of anyone of claims 1 to 8, the battery (10) being used for supplying electric energy.

## Patentansprüche

1. Eine Batterie, umfassend:
Batteriezellen (20); und
ein Übertragungssystem, das einen Verbinder (25) umfasst, wobei das Übertragungssystem zum Übertragen von Signalen der Mehrzahl von Batteriezellen (20) verwendet wird;
wobei der Verbinder (25) umfasst:
einen Steckeranschluss (251) und einen Buchsenanschluss (252), wobei der Steckeranschluss (251) M erste Steckstifte (2511) und N zweite Steckstifte (2512) umfasst und der Buchsenanschluss (252) M erste Buchsen (2521) und N zweite Buchsen (2522) umfasst, wobei M und N positive ganze Zahlen sind; und
wenn das Stecken des Steckeranschlusses (251) und des Buchsenanschlusses (252) ordnungsgemäß erfolgt ist, die M ersten Steckstifte (2511) jeweils in die M ersten Buchsen (2521) gesteckt sind, um M erste Schleifen zu bilden, und die N zweiten Steckstifte (2512) jeweils in die N zweiten Buchsen (2522) gesteckt sind, um N zweite Schleifen zu bilden, wobei ein zweiter leitfähiger Kontaktabstand (L₂) zwischen jedem zweiten Steckstift (2512) und der entsprechenden zweiten Buchse (2522) kleiner ist als ein erster leitfähiger Kontaktabstand (L₁) zwischen jedem ersten Steckstift (2511) und der entsprechenden ersten Buchse (2521), wobei die zweite Buchse (2522) mit einem Stift-Kabelbaum (253) der ersten Buchse (2521) verbunden ist und der zweite Steckstift (2512) und der erste Steckstift (2511) jeweils mit unterschiedlichen Stift-Kabelbäumen (253) verbunden sind.

2. Eine Batterie, umfassend:
Batteriezellen (20); und
ein Übertragungssystem, das einen Verbinder (25) umfasst, wobei das Übertragungssystem zum Übertragen von Signalen der Mehrzahl von Batteriezellen (20) verwendet wird;
wobei der Verbinder (25) umfasst:
einen Steckeranschluss (251) und einen Buchsenanschluss (252), wobei der Steckeranschluss (251) M erste Steckstifte (2511) und N zweite Steckstifte (2512) umfasst und der Buchsenanschluss (252) M erste Buchsen (2521) und N zweite Buchsen (2522) umfasst, wobei M und N positive ganze Zahlen sind; und
wenn das Stecken des Steckeranschlusses (251) und des Buchsenanschlusses (252) ordnungsgemäß erfolgt ist, die M ersten Steckstifte (2511) jeweils in die M ersten Buchsen (2521) gesteckt sind, um M erste Schleifen zu bilden, und die N zweiten Steckstifte (2512) jeweils in die N zweiten Buchsen (2522) gesteckt sind, um N zweite Schleifen zu bilden, wobei ein zweiter leitfähiger Kontaktabstand (L₂) zwischen jedem zweiten Steckstift (2512) und der entsprechenden zweiten Buchse (2522) kleiner ist als ein erster leitfähiger Kontaktabstand (L₁) zwischen jedem ersten Steckstift (2511) und der entsprechenden ersten Buchse (2521), wobei der zweite Steckstift (2512) mit einem Stift-Kabelbaum (253) des ersten Steckstifts (2511) verbunden ist und die zweite Buchse (2522) und die erste Buchse (2521) jeweils mit unterschiedlichen Stift-Kabelbäumen (253) verbunden sind.

3. Batterie nach Anspruch 1 oder 2, wobei eine Differenz zwischen dem zweiten leitfähigen Kontaktabstand (L₂) und dem ersten leitfähigen Kontaktabstand (L₁) 2 mm - 7 mm beträgt; und/oder der zweite leitfähige Kontaktabstand (L₂) nicht kleiner als 2 mm ist.

4. Batterie nach einem der vorhergehenden Ansprüche, wobei M nicht kleiner als 1 ist und N gleich 1 ist.

5. Batterie nach einem der Ansprüche 1-4, wobei eine Abmessung des zweiten Steckstifts (2512), der sich von einer ersten Steckfläche (2513) des Steckeranschlusses (251) erstreckt, kleiner ist als eine Abmessung des ersten Steckstifts (2511), der sich von der ersten Steckfläche (2513) erstreckt; und
wenn das Stecken des Steckeranschlusses (251) und des Buchsenanschlusses (252) vollständig ordnungsgemäß erfolgt ist, die erste Steckfläche (2513) des Steckeranschlusses (251) an einer zweiten Steckfläche (2523) des Buchsenanschlusses (252) angebracht ist.

6. Batterie nach einem der Ansprüche 1-4, wobei ein Abstand zwischen einer leitfähigen Kontaktöffnung (254) der zweiten Buchse (2522) und einer zweiten Steckfläche (2523) des Buchsenanschlusses (252) größer ist als ein Abstand zwischen einer leitfähigen Kontaktöffnung (254) der ersten Buchse (2521) und the zweiten Steckfläche (2523); und
wenn das Stecken des Steckeranschlusses (251) und des Buchsenanschlusses (252) vollständig ordnungsgemäß erfolgt ist, eine erste Steckfläche (2513) des Steckeranschlusses (251) an einer zweiten Steckfläche (2523) des Buchsenanschlusses (252) angebracht ist.

7. Batterie nach einem der Ansprüche 1 bis 6, wobei die zweite Schleife zum Detektieren verwendet wird, ob das Stecken des Steckeranschlusses (251) und des Buchsenanschlusses (252) ordnungsgemäß erfolgt ist.

8. Batterie nach Anspruch 7, wobei die zweite Schleife eine Frühwarneinrichtung zum Anzeigen umfasst, ob das Stecken des Steckeranschlusses (251) und des Buchsenanschlusses (252) ordnungsgemäß erfolgt ist.

9. Energieverbrauchendes Gerät, umfassend:
eine Batterie (10) nach einem der Ansprüche 1 bis 8, wobei die Batterie (10) zum Zuführen von elektrischer Energie verwendet wird.

## Revendications

1. Batterie, comprenant :
des cellules de batterie (20) ; et
un système de transmission comprenant un connecteur (25), le système de transmission étant utilisé pour transmettre des signaux de la pluralité de cellules de batterie (20) ;
ledit connecteur (25) comprenant :
une borne mâle (251) et une borne femelle (252), dans laquelle la borne mâle (251) comprend M premières broches de fiche (2511) et N deuxièmes broches de fiche (2512), et la borne femelle (252) comprend M premières prises femelles (2521) et N deuxièmes prises femelles (2522), avec M et N étant des entiers positifs ; et
lorsque l'enfichage de la borne mâle (251) et de la borne femelle (252) est en place, les M premières broches de fiche (2511) sont respectivement enfichées dans les M premières prises femelles (2521) pour former M premières boucles, et les N deuxièmes broches de fiche (2512) sont respectivement enfichées dans les N deuxièmes prises femelles (2522) pour former N deuxièmes boucles, avec une deuxième distance de contact conducteur (L₂) entre chaque deuxième broche de fiche (2512) et la deuxième prise femelle correspondante (2522) étant inférieure à une première distance de contact conducteur (L₁) entre chaque première broche de fiche (2511) et la première prise femelle correspondante (2521), dans laquelle la deuxième prise femelle (2522) est connectée à un faisceau de broches (253) de la première prise femelle (2521), et la deuxième broche de fiche (2512) et la première broche de fiche (2511) sont respectivement connectées à différents faisceaux de broches (253).

2. Batterie, comprenant :
des cellules de batterie (20) ; et
un système de transmission comprenant un connecteur (25), le système de transmission étant utilisé pour transmettre des signaux de la pluralité de cellules de batterie (20) ;
ledit connecteur (25) comprenant :
une borne mâle (251) et une borne femelle (252), dans laquelle la borne mâle (251) comprend M premières broches de fiche (2511) et N deuxièmes broches de fiche (2512), et la borne femelle (252) comprend M premières prises femelles (2521) et N deuxièmes prises femelles (2522), avec M et N étant des entiers positifs ; et
lorsque l'enfichage de la borne mâle (251) et de la borne femelle (252) est en place, les M premières broches de fiche (2511) sont respectivement enfichées dans les M premières prises femelles (2521) pour former M premières boucles, et les N deuxièmes broches de fiche (2512) sont respectivement enfichées dans les N deuxièmes prises femelles (2522) pour former N deuxièmes boucles, avec une deuxième distance de contact conducteur (L₂) entre chaque deuxième broche de fiche (2512) et la deuxième prise femelle correspondante (2522) étant inférieure à une première distance de contact conducteur (L₁) entre chaque première broche de fiche (2511) et la première prise femelle correspondante (2521), dans laquelle la deuxième broche de fiche (2512) est connectée à un faisceau de broches (253) de la première broche de fiche (2511), et la deuxième prise femelle (2522) et la première prise femelle (2521) sont respectivement connectées à différents faisceaux de broches (253).

3. Batterie selon la revendication 1 ou 2, dans laquelle une différence entre la deuxième distance de contact conducteur (L₂) et la première distance de contact conducteur (L₁) est de 2 mm - 7 mm ; et/ou la deuxième distance de contact conducteur (L₂) n'est pas inférieure à 2 mm.

4. Batterie selon l'une quelconque des revendications précédentes, dans laquelle M n'est pas inférieur à 1 et N est égal à 1.

5. Batterie selon l'une quelconque des revendications 1-4, dans laquelle une dimension de la deuxième broche de fiche (2512) s'étendant depuis une première face d'enfichage (2513) de la borne mâle (251) est plus petite qu'une dimension de la première broche de fiche (2511) s'étendant depuis la première face d'enfichage (2513) ; et
lorsque l'enfichage de la borne mâle (251) et de la borne femelle (252) est complètement en place, la première face d'enfichage (2513) de la borne mâle (251) est fixée à une deuxième face d'enfichage (2523) de la borne femelle (252).

6. Batterie selon l'une quelconque des revendications 1-4, dans laquelle une distance entre une ouverture de contact conducteur (254) de la deuxième prise femelle (2522) et une deuxième face d'enfichage (2523) de la borne femelle (252) est supérieure à une distance entre une ouverture de contact conducteur (254) de la première prise femelle (2521) et la deuxième face d'enfichage (2523) ; et
lorsque l'enfichage de la borne mâle (251) et de la borne femelle (252) est complètement en place, une première face d'enfichage (2513) de la borne mâle (251) est fixée à la deuxième face d'enfichage (2523) de la borne femelle (252).

7. Batterie selon l'une quelconque des revendications 1 à 6, dans laquelle la deuxième boucle est utilisée pour détecter si l'enfichage de la borne mâle (251) et de la borne femelle (252) est en place.

8. Batterie selon la revendication 7, dans laquelle la deuxième boucle comprend un dispositif d'alerte précoce pour indiquer si l'enfichage de la borne mâle (251) et de la borne femelle (252) est en place.

9. Appareil consommateur d'énergie, comprenant :
une batterie (10) selon l'une quelconque des revendications 1 à 8, la batterie (10) étant utilisée pour fournir de l'énergie électrique.
